(19) Europäisches Patentamt
European Patent Office
Office européen des brevets

(11) Numéro de publication : **0 026 720**
**B1**

(12) # FASCICULE DE BREVET EUROPÉEN

(45) Date de publication du fascicule du brevet : **05.10.83**

(51) Int. Cl.³ : **C 08 G 63/18**, C 08 G 63/66

(21) Numéro de dépôt : **80420105.1**

(22) Date de dépôt : **18.09.80**

(54) **Masses fondues anisotropes conformables à base de polyesters aromatiques, leurs procédés de préparation et articles formés à partir d'elles.**

(30) Priorité : **21.09.79 FR 7924135**

(43) Date de publication de la demande : **08.04.81 Bulletin 81/14**

(45) Mention de la délivrance du brevet : **05.10.83 Bulletin 83/40**

(84) Etats contractants désignés : **AT BE CH DE FR GB IT LI LU NL SE**

(56) Documents cités :
**DE A 1 795 502**
**US A 3 991 013**
**US A 3 991 014**

(73) Titulaire : **RHONE-POULENC SPECIALITES CHIMIQUES**
**"Les Miroirs" 18, Avenue d'Alsace**
**F-92400 Courbevoie (FR)**

(72) Inventeur : **Fayolle, Bernard**
**226, rue des Trois Moulins Rubelles**
**F-77950 Maincy (FR)**

(74) Mandataire : **Troillet, Maurice et al**
**RHONE-POULENC RECHERCHES Centre de Recherches de Saint-Fons Service Brevets B.P. 62**
**F-69190 Saint-Fons (FR)**

**EP 0 026 720 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

# Masses fondues anisotropes conformables à base de polyesters aromatiques, leurs procédés de préparation et articles formés à partir d'elles

La présente invention concerne des masses fondues anisotropes conformables à base de polyesters aromatiques contenant des enchaînements du type éther arylaliphatique.

Elle concerne également des procédés pour l'obtention desdites masses fondues anisotropes.

Elle concerne encore les articles issus de ces masses fondues, tels que notamment des fils, fibres, films ou objets moulés, mis en forme à partir de la mésophase desdites masses fondues.

Il est connu d'après la demande française N° 2 270 282, publiée le 5 Décembre 1975, de préparer des polyesters comprenant des résidus d'un ou plusieurs diphénols et d'un ou plusieurs diacides carboxyliques aromatiques et/ou cycloaliphatiques capables de former par fusion des masses fondues anisotropes à partir desquelles des filaments orientés peuvent être formés par filage à l'état fondu. On exclut du domaine visé par ce document les homopolyesters préparés à partir d'un diacide carboxylique contenant deux noyaux aromatiques liés par une chaîne aliphatique comportant quatre atomes ou plus. Il y a lieu de penser que la raison de cette exclusion réside dans le fait que les homopolyesters précités doivent présenter à l'état fondu une température de transformation trop proche de la température de dégradation de sorte que le filage à l'état fondu est rendu difficile ou même impossible. L'expression « température de transformation » est expliquée plus en détail dans la suite du présent mémoire.

Dans le brevet anglais N° 989 552, on décrit des homopolyesters dérivés de diphénols et de dicarboxy-p,p' diphénoxy-1,2 éthane. Ces homopolyesters sont préparés à partir d'un diacide contenant deux noyaux aromatiques liés par une chaîne aliphatique comportant quatre atomes. L'anisotropie à l'état fondu de ces homopolyesters particuliers ne semble pas établie et on note que de tels composés possèdent des températures d'écoulement suprérieures à 350 °C, c'est-à-dire très proches de la température de dégradation de ces polyesters. Cette information vient conforter l'idée selon laquelle les homopolyesters dérivés d'un diacide carboxylique contenant deux noyaux aromatiques liés par une chaîne aliphatique comportant quatre atomes ou plus ne peuvent pas convenir pour faire des transformations à l'état fondu conduisant à des articles conformés.

Poursuivant des recherches dans ce domaine de la technique la demanderesse a maintenant trouvé de manière surprenante qu'il est possible de préparer des masses fondues issues d'homopolyesters dérivés de diphénols et de diacides carboxyliques contenant deux noyaux aromatiques liés par une chaîne aliphatique comportant plus de quatre atomes qui soient anisotropes et qui possèdent une plage de températures de transformation suffisamment inférieures à la température de dégradation des polyesters pour permettre une mise en forme aisée.

Plus précisément, la présente invention concerne des masses fondues anisotropes conformables à base de polyesters aromatiques, caractérisées en ce qu'elles sont préparées par fusion des homopolyesters présentant les particularités suivantes :

ils sont constitués par des motifs de récurrence de formules :

(I) 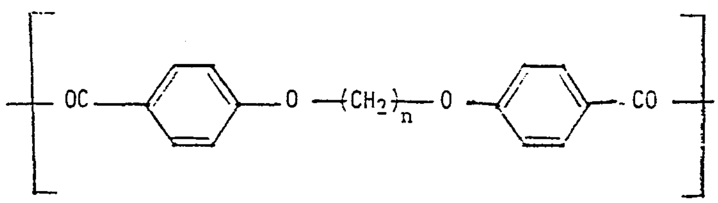

et

(II) 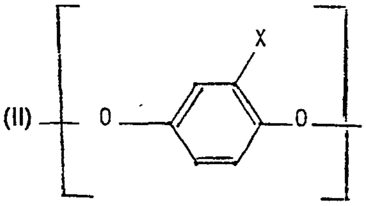

dans lesquelles :

— n = 4 et X représente un groupe méthyle ou un atome de chlore,

— n = 6 et X représente un atome d'hydrogène, un groupe méthyle ou un atome de chlore ;

ils présentent des températures d'écoulement comprises entre 200 °C et 340 °C.

Les motifs de récurrence de formule (I) sont issus de diacides carboxyliques ou leurs dérivés, tandis que les motifs de récurrence de formule (II) sont issus de diphénols ou de leurs di-esters.

La présente invention concerne également les articles en forme obtenus à partir des masses fondues anisotropes.

L'anisotropie des masses fondues selon la présente invention peut être mise en évidence lorsque l'on

observe les polyesters à l'état fondu dans des systèmes optiques équipés de polariseurs croisés : il se produit une transmission de la lumière polarisée et création d'une forte biréfringence alors que la transmission de la lumière et la biréfringence sont nulles pour les produits isotropes observés en lumière polarisée.

La mise en évidence de l'anisotrope des masses fondues selon la présente invention a été effectuée par la méthode thermooptique TOT décrite dans la demande française 2 270 282.

De ce fait, les masses fondues possèdent une orientation propre et un degré relativement élevé d'organisation qui se retrouvent sur les articles conformés tels que par exemple des fils, des films, des objets moulés, leur conférant déjà à l'état brut de bonnes propriétés mécaniques que l'on n'observe pas habituellement sur les produits bruts isotropes.

Dans le cadre de la présente invention, les masses fondues anisotropes conformables qui sont visées de préférence sont celles qui dérivent des homopolyesters possèdant la structure définie ci-avant et présentant des températures d'écoulement comprises entre 250 °C et 300 °C.

On entend par « température d'écoulement » la température à laquelle les bords d'un échantillon sous forme de copeau de polymère ou de fibre coupée commencent à s'arrondir. Cette température est déterminée par observation visuelle de l'échantillon sur une lamelle couvre-objet placée entre des polariseurs croisés (90 °C) pour une vitesse de montée en température appropriée, généralement de l'ordre de 10 à 20 °C/minute sur un microscope équipé d'une platine chauffante connu dans le commerce sous la marque THERMOPAN et fabriqué par REICHERT.

Les polymères constituant les masses fondues selon la présente invention sont insolubles dans les solvants habituels des polyesters, notamment les solvants utilisés pour les mesures de viscosité inhérente de pareils produits. C'est pourquoi la viscosité inhérente n'a pas pu être déterminée ici.

Parmi les solvants essayés, on peut citer : le p-chlorophénol ; le mélange parachlorophénol/dichloro-1,2 éthane ; l'acide trifluoroacétique, seul ou en mélange avec des solvants chlorés ; l'acide dichloroacétique ; l'orthocrésol ; l'orthochlorophénol, le métacrésol et le tétrachloroéthane.

Il convient de noter que les masses fondues à l'état anisotropes selon la présente invention possèdent des plages de températures de transformation étalées sur 30 °C au moins.

On entend par « plage de températures de transformation » la zone de températures, qui part de la température d'écoulement du polyester et qui se situe au-dessus de ladite température, à l'intérieur de laquelle la masse fondue est anisotrope et facilement conformable sans aucun risque de décomposition du polyester.

Les homopolyesters thermotropes dont dérivent par fusion les masses fondues anisotropes peuvent être obtenus avantageusement par réaction d'acidolyse, c'est-à-dire par réaction dans les proportions sensiblement stoechiométriques entre un diester de diphénol de formule :

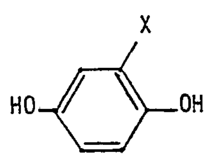

tel que les diesters d'acide alcanoïque comportant de 2 à 6 atomes de carbone (de préférence le diacétate) et un diacide carboxylique de formule :

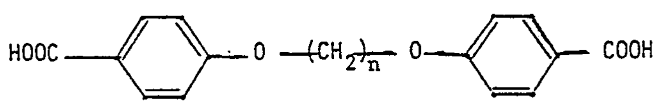

dans lesquelles X et n ont les significations indiquées ci-avant, éventuellement en présence de catalyseurs, choisis notamment parmi les sels de sodium, potassium, magnésium ou calcium dérivés d'acides carboxyliques.

Le diphénol auquel on fait appel peut être l'hydroquinone, la méthylhydroquinone ou la chlorohydroquinone. Lorsque n = 4, le diacide mis en œuvre est le dicarboxy-p,p' diphénoxy-1,4 butane. Lorsque n = 6, le diacide est le dicarboxy-p,p' diphénoxy-1,6 hexane.

La réaction débute au-dessus de 200 °C, puis l'acide formé distille alors que la température de la masse réactionnelle est élevée au-delà de 280 °C. Lorsque la distillation de l'acide est à peu près terminée, la pression est diminuée progressivement et la polycondensation est effectuée sous un vide important pendant au moins 30 minutes.

Les homopolyesters peuvent également être obtenus par réaction du diphénol libre et d'un dérivé de l'acide dicarboxylique (notamment un dihalogénure comme un dichlorure ou un diester de diaryle comme le diester de diphényle) en proportions sensiblement stoechiométriques, généralement en présence de catalyseurs tels que ceux cités dans le brevet canadien N° 735 543.

Enfin, il est généralement possible d'opérer par estérification directe entre le diphénol et le diacide, en présence de catalyseurs connus.

Les masses fondues anisotropes selon la présente invention peuvent être mises en forme au moyen de tout procédé connu, tel que filage, filmage, moulage et en opérant dans la phase d'anisotropie pour donner des articles en forme ayant un bon niveau de propriétés.

Plus précisément ces articles en forme, issus d'homopolyesters (donc de composés de structure chimique simple), possèdent des caractéristiques mécaniques en matière par exemple de résistance en flexion, de résistance en traction et de moule de torsion qui sont d'un niveau au moins égal à celui des matières plastiques renforcées par des fibres de verre. Ces articles conservent en outre un bon niveau de propriétés en fonction de la température.

C'est le cas par exemple des objets moulés par injection qui présentent les propriétés suivantes :

— un module de flexion supérieur à 200 daN/mm$^2$ (mesuré selon la norme NF T 51 001), et

— un module de torsion à 140 °C d'au moins 20 daN/mm$^2$ (mesuré selon la norme ISO, R 537, méthode B).

Généralement, ils possèdent un module de flexion supérieur à 400 daN/mm$^2$ et un module de torsion d'au moins 50 daN/mm$^2$.

D'autres articles particulièrement intéressants obtenus à partir des masses fondues anisotropes selon l'invention sont les filaments qui possèdent déjà, immédiatement après le filage, un module d'élasticité d'au moins 500 cN/tex et plus généralement d'au moins 700 à 800 cN/tex.

De plus, il est possible d'augmenter encore les propriétés mécaniques de ces filaments par un traitement thermique à température élevée, inférieure à la température d'écoulement du polyester.

Les exemples qui suivent dans lesquels, sauf indication contraire, les parties et pourcentages s'entendent en poids, sont donnés à titre indicatif mais non limitatif pour illustrer l'invention.

Exemple 1

Dans un réacteur de polycondensation, on introduit :

| | | |
|---|---|---|
| — dicarboxy-p,-p' diphénoxy-1,6 hexane | 143,2 | parties |
| — diacétate d'hydroquinone | 77,6 | parties |
| — acétate de magnésium | 0,383 | partie |

On purge l'appareil à l'azote et on chauffe le réacteur par bain métallique ; à partir de 231 °C, l'acide acétique distille ; lorsque 60 % environ de la quantité théorique d'acide ont distillé, on élève la température de la masse réactionnelle de 235 °C à 320 °C. La pression dans l'appareil est diminuée de 1 010 · 10$^2$ Pa à 2,66 · 10$^2$ Pa en 20 minutes et l'on maintient la température pendant 10 minutes à cette pression.

Le polymère obtenu, d'aspect fibrillaire, est insoluble dans les solvants essayés (acide trifluoroacétique, tétrachloroéthane, p-chlorophénol, mélange p-chlorophénol/dichloro-1,2-éthane). Il possède une température d'écoulement de 325 °C.

La plage de températures de transformation de la masse fondue anisotrope issue de ce polymère va de 325 °C à plus de 355 °C.

Le polymère est séché ensuite pendant 48 heures à 80 °C sous vide avant d'être filé à travers une filière de 7 orifices de diamètre 0,23 mm, chacun de ces orifices étant à une température de 325 °C.

Les filaments obtenus, de titre global 106 dtex, possèdent un module d'élasticité initial de 1 123 cN/tex, une ténacité de 15,5 cN/tex, un allongement de 1,8 %.

Ils sont ensuite traités thermiquement de la manière suivante :

— de 23 °C à 250 °C pendant 0,8 heure

— puis à 250 °C pendant 1 heure

— de 250 °C à 270 °C pendant 0,2 heure

— à 270 °C pendant 0,3 heure

Titre : 100 dtex

Ténacité : 19,6 cN/tex

Allongement : 3,1 %

A la suite de ce traitement, ils sont ensuite chauffés pendant 0,3 heure à 286 °C :

Titre : 100 dtex

Ténacité : 24,5 cN/tex

Allongement : 3 %

puis pendant 1,55 heure à 286 °C :

Titre : 110 dtex

Ténacité : 31,3 cN/tex

Allongement : 3,2 %

Exemple 2

Dans un réacteur de polycondensation, on introduit simultanément :

— diacétate de méthylhydroquinone 93,6 parties

— dicarboxy-p,p' diphénoxy-1,6 hexane 161,26 parties
— acétate de magnésium 0,127 partie

Après une purge à l'azote, le réacteur est chauffé avec un bain métallique réglé à 250 °C. Lorsque la masse réactionnelle atteint 239 °C, la réaction d'acidolyse démarre et en une heure la température est élevée peu à peu à 295 °C alors que le poids d'acide acétique distillé est de 88,61 % de la quantité théorique. La pression est ensuite progressivement diminuée de 1 010 · $10^2$ Pa à 0,93 · $10^2$ Pa en 30 minutes ; la masse réactionnelle est maintenue pendant 1 heure à 295 °C sous une pression de 0,53 · $10_2$ Pa. Au total 98,15 % de la quantité théorique d'acide acétique ont distillé. Le polyester obtenu est coulé dans un mélange eau/glace : il est fibrillaire et insoluble. Il possède une température d'écoulement de 260 °C.

La plage de températures de transformation de la masse fondue anisotrope issue de ce polyester va de 260 °C jusqu'à 345 °C environ, température à laquelle il commence à se dégrader. Après broyage, le polyester est séché pendant 6 heures à 150 °C sous une pression de 1,33 · $10^2$ Pa puis pendant 15 heures à 90 °C sous vide.

Il est moulé par injection sur presse « KAP » sous atmosphère d'azote dans les conditions suivantes :

| Eprouvettes | Dimensions | Température | Pression |
|---|---|---|---|
| | 4 × 8,4 × 80 mm | 280-290 °C | 68,67 · $10^4$ Pa d'azote |
| Haltères | 2 × 4,4 × 50 mm | 290 °C | 68,67 · $10^4$ Pa d'azote |
| Barreaux à entailles | épaisseur sous entaille : 2,7 mm | 280-290 °C | 39,24 · $10^4$ Pa d'azote |

Les résultats obtenus sont les suivants :

Propriétés en flexion :
(sur éprouvettes)
— résistance (daN/$mm^2$) 14,2
— module d'élasticité à la rupture (daN/mm2) 452

Propriétés en traction :
(sur haltères)
— résistance (daN/mm2) 7,8
— allongement % 0,98
— module d'élasticité à la rupture (daN/mm2) 809
Résistance au choc Charpy :
(barreaux avec entailles) dJ/$cm^{-2}$ 16,9

Module élastique de torsion à 140 °C :
(sur éprouvettes) en daN/mm2 54
Analyse thermogravimétrique
(montée en température de 15 °C/min) faite sur polymère avant moulage :

| Température | Perte de poids % |
|---|---|
| 410 | 1 |
| 415 | 2,5 |
| 420 | 5 |
| 440 | 16 |
| 460 | 31 |
| 480 | 50 |
| 500 | 63 |
| 600 | 75 |
| 700 | 78 |
| 800 | 80 |

Exemple 3

Dans un réacteur de polycondensation, on charge :

— diacétate de chlorohydroquinone 102,88 parties
— dicarboxy-p,p' diphénoxy-1,4 butane 148,64 parties
— acétate de magnésium 0,126 partie

Après purge à l'azote, le réacteur est chauffé avec un bain métallique réglé à 250 °C.

La réaction d'acidolyse démarre à 235 °C et en 1,25 heure la masse est amenée à 288 °C. La proportion d'acide acétique distillé est alors de 90,74 % de la quantité théorique. En 30 minutes, la pression est abaissée à $0,93 \cdot 10^2$ Pa et la température de la masse est maintenue à 295 °C pendant 35 minutes.

On obtient 184 parties (93,15 %) de polymère qui est insoluble dans le mélange p-chlorophénol/dichloro-1,2 éthane.

La température d'écoulement du polymère est de 300 °C.

La plage de températures de transformation de la masse fondue issue de ce polymère va de 300 °C jusqu'à plus de 355 °C.

Après broyage et séchage du polymère de la manière indiquée dans l'exemple 2, on moule des éprouvettes par injection sur presse « KAP » dans les conditions suivantes :

| Eprouvettes | Dimensions | Température | Pression |
|---|---|---|---|
| | 4 × 8,4 × 80 mm | 300 °C | $58,86 \cdot 10^4$ Pa d'azote |
| Haltères | 2 × 4,4 × 50 mm | 300 °C | $58,86 \cdot 10^4$ Pa d'azote |

Les résultats obtenus sont les suivants :

| | |
|---|---|
| Propriétés en flexion : | |
| (sur éprouvettes) | |
| — résistance (daN/mm2) | 1,75 |
| — module d'élasticité à la rupture (daN/mm2) | 257 |
| Propriétés en traction : | |
| (sur haltères) | |
| — résistance (daN/mm2) | 0,83 |
| Module élastique de torsion à 140 °C | |
| (sur éprouvettes) en daN/mm2 | 23 |

## Exemple 4

Dans un réacteur de polycondensation, on introduit :

| | |
|---|---|
| — diacétate de méthylhydroquinone | 93,6 parties |
| — dicarboxy-p,p' diphényl-1,4 butane | 148,64 parties |
| — acétate de magnésium | 0,121 partie |

La réaction d'acidolyse débute à 258 °C et en 1 heure 25 minutes la masse réactionnelle est amenée progressivement à 300 °C. La proportion d'acide acétique distillé est de 91,85 % de la quantité théorique. La pression est ensuite diminuée à $3,99 \cdot 10^2$ Pa en 30 minutes ; la température de la masse réactionnelle est élevée à 310 °C et maintenue pendant 25 minutes à cette valeur.

Le polymère obtenu, coulé dans un bain eau/glace, est insoluble dans le mélange p-chlorophénol/dichloro-1,2 éthane. Il a une température d'écoulement de 320 °C.

La plage de températures de transformation de la masse fondue issue de ce polyester va de 320 °C jusqu'à plus de 355 °C.

Après broyage et séchage dans les conditions indiquées dans l'exemple 2, il est moulé par injection sur presse « KAP » dans les conditions suivantes :

| Eprouvettes | Dimensions | Température | Pression |
|---|---|---|---|
| | 4 × 8,4 × 80 mm | 340 °C | $58,86 \cdot 10^4$ Pa d'azote |
| Haltères | 2 × 4,4 × 50 mm | 340 °C | $58,86 \cdot 10^4$ Pa d'azote |

Propriétés mécaniques obtenues :

| | |
|---|---|
| Propriétés en flexion : | |
| (sur éprouvettes) | |
| — résistance (daN/mm2) | 3,87 |
| — module d'élasticité à la rupture (daN/mm2) | 487 |
| Propriétés en traction : | |
| (sur haltères) | |
| — résistance (daN/mm2) | 2,5 |
| — allongement % | 0,37 |
| — module d'élasticité à la rupture (daN/mm2) | 685 |

Module élastique de torsion à 140 °C :
(sur éprouvettes) en daN/mm2 47

Exemple 5

On utilise un polymère identique à celui préparé selon l'exemple 1 qui est séché pendant 6 heures à 150 °C sous $1,33 \cdot 10^2$ Pa, puis pendant 15 heures à 90 °C sous vide.

Il est moulé par injection sur presse « KAP » dans les conditions suivantes :

| Eprouvettes | Dimensions | Température | Pression |
|---|---|---|---|
| | 4 × 8,4 × 80 mm | 300 °C | $58,86 \cdot 10^4$ Pa d'azote |
| Haltères | 2 × 4,4 × 50 mm | 300 °C | $58,86 \cdot 10^4$ Pa d'azote |
| Barreaux à entailles | 4 × 6 × 50 mm | 340 °C | $58,86 \cdot 10^4$ Pa d'azote |

épaisseur sous entaille : 2,7 mm
Caractéristiques obtenues :

Propriétés en flexion :
(sur éprouvettes)
— résistance (daN/mm2) 2,97
— module d'élasticité à la rupture (daN/mm2) 227

Propriétés en traction :
(sur haltères)
— résistance (daN/mm2) 0,89
— allongement % 0,36
— module d'élasticité à la rupture (daN/mm2) 275

Résistance au choc Charpy :
(barreaux avec entailles) dJ/$cm^{-2}$ 2,49

— Module élastique de torsion à 140 °C :
(sur éprouvettes) en daN/mm2 50

**Revendications** (pour les Etats Contractants : BE, CH, DE, FR, GB, IT, LI, LU, NL, SE)

1. Masses fondues anisotropes conformables à base de polyesters aromatiques, caractérisés en ce qu'elles sont préparés par fusion des homopolyesters présentant les particularités suivantes :

Ils sont constitués par des motifs de récurrence de formules :

(I) 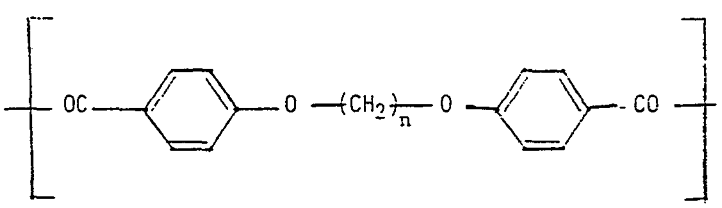

et

(II) 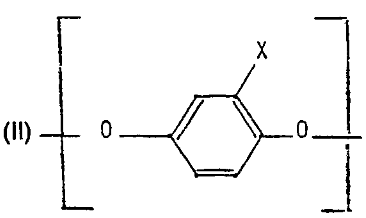

dans lesquelles :

— n = 4 et X représente un groupe méthyle ou un atome de chlore,

— n = 6 et X représente un atome d'hydrogène, un groupe méthyle ou un atome de chlore,

ils présentent des températures d'écoulement comprises entre 200 °C et 340 °C.

2. Masses fondues selon la revendication 1, caractérisées en ce que les homopolyesters présentent des températures d'écoulement comprises entre 250 °C et 300 °C.

3. Procédé de préparation des masses fondues anisotropes selon l'une quelconque des revendications 1 et 2, caractérisé en ce que l'on fait fondre des homopolyesters qui sont obtenus en faisant réagir dans des proportions sensiblement stoechiométriques :

un diester dérivé d'un acide alcanoïque comportant de 2 à 6 atomes de carbone et d'un diphénol de formule :

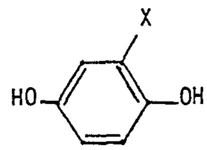

dans laquelle X représente un atome d'hydrogène, un groupe méthyle ou un atome de chlore,

avec un diacide carboxylique de formule :

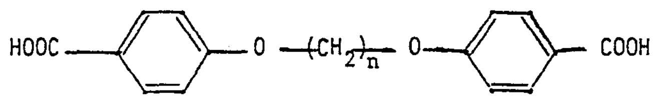

dans laquelle n est égal à 4 ou 6 avec la condition que pour n = 4, X représente seulement un groupe méthyle ou un atome de chlore.

4. Procédé de préparation des masses fondues anisotropes selon l'une quelconque des revendications 1 et 2 caractérisé en ce que l'on fait fondre des homopolyesters qui sont obtenus en faisant réagir dans des proportions sensiblement stoechiométriques :

un diphénol de formule :

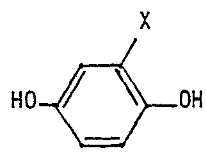

dans laquelle X représente un atome d'hydrogène, un groupe méthyle ou un atome de chlore,

avec un dihalogénure ou un diester de diaryle dérivé de l'acide de formule :

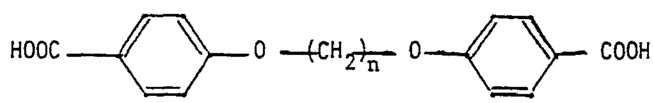

dans laquelle n est égal à 4 ou 6 avec la condition que pour n = 4, X représente seulement un groupe méthyle ou un atome de chlore.

5. Application des masses fondues anisotropes selon l'une quelconque des revendications 1 et 2 à la réalisation d'articles conformés tels que fils, films et objets moulés.

6. Application selon la revendication 5, caractérisée en ce que les masses fondues anisotropes possèdent des plages de températures de transformation étalées sur 30 °C au moins.

**Revendications** (pour l'Etat Contractant AT)

1. Procédé de préparation de masses fondues anisotropes conformables à base de polyesters aromatiques, caractérisé en ce que l'on fait fondre des homopolyesters ayant des températures d'écoulement comprises entre 200 °C et 340 °C, qui sont obtenus en faisant réagir dans des proportions sensiblement stoechiométriques :

un diester dérivé d'un acide alcanoïque comportant de 2 à 6 atomes de carbone et d'un diphénol de formule :

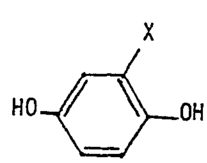

dans laquelle X représente un atome d'hydrogène, un groupe méthyle ou un atome de chlore,

avec un diacide carboxylique de formule :

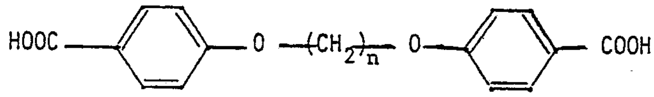

dans laquelle n est égal à 4 ou 6 avec la condition que pour n = 4, X représente seulement un groupe méthyle ou un atome de chlore.

2. Procédé de préparation des masses fondues anisotropes conformables à base de polyesters aromatiques, caractérisé en ce que l'on fait fondre des homopolyesters ayant des températures d'écoulement comprises entre 200 °C et 340 °C, qui sont obtenus en faisant réagir dans des proportions sensiblement stoechiométriques :

un diphénol de formule :

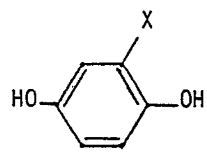

dans laquelle X représente un atome d'hydrogène, un groupe méthyle ou un atome de chlore,

avec un dihalogénure ou un diester de diaryle dérivé de l'acide de formule :

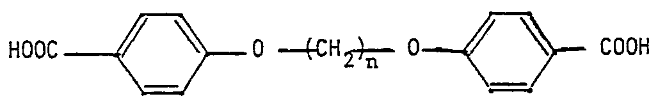

dans laquelle n est égal à 4 ou 6 avec la condition que pour n = 4, X représente seulement un groupe méthyle ou un atome de chlore.

3. Application des masses fondues anisotropes obtenues selon l'une quelconque des revendications 1 et 2 à la réalisation d'articles conformés tels que fils, films et objets moulés.

4. Application selon la revendication 3, caractérisée en ce que les masses fondues anisotropes possèdent des plages de températures de transformation étalées sur 30 °C au moins.

**Claims** (for the Contracting States : BE, CH, DE, FR, GB, IT, LI, LU, NL, SE)

1. Anisotropic molten masses which can be shaped, based on aromatic polyesters, characterised in that they are prepared by melting homopolyesters having the following characteristics :

they consist of repeat units of the formulae :

(I) 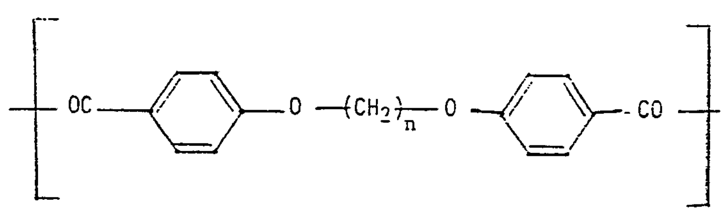

and

(II) 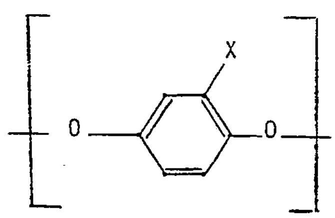

in which :

— n = 4 and X represents a methyl group or a chlorine atom, or

— n = 6 and X represents a hydrogen atom, a methyl group or a chlorine atom, and

they have flow temperatures of between 200 °C and 340 °C.

2. Molten masses according to Claim 1, characterised in that the homopolyesters have flow

temperatures of between 250 °C and 300 °C.

3. Process for the preparation of the anisotropic molten masses according to either one of Claims 1 and 2, characterised in that homopolyesters are melted which are obtained by reacting the following in substantially stoichiometric proportions :

a diester derived from an alkanoic acid containing from 2 to 6 carbon atoms and from a diphenol of the formula :

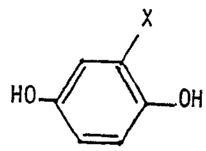

in which X represents a hydrogen atom, a methyl group or a chlorine atom, and

a dicarboxylic acid of the formula :

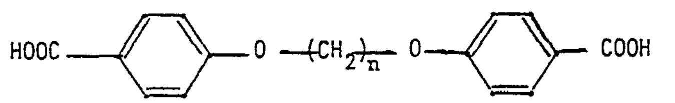

in which n is equal to 4 or 6, with the proviso that, for n = 4, X only represents a methyl group or a chlorine atom.

4. Process for the preparation of the anisotropic molten masses according to either one of Claims 1 and 2, characterised in that homopolyesters are melted which are obtained by reacting the following in substantially stoichiometric proportions :

a diphenol of the formula :

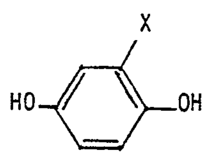

in which X represents a hydrogen atom, a methyl group or a chlorine atom, and

a dihalide or a diaryl diester derived from the acid of the formula :

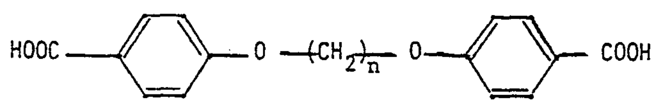

in which n is equal to 4 or 6, with the proviso that, for n = 4, X only represents a methyl group or a chlorine atom.

5. Application of the anisotropic molten masses according to either one of Claims 1 and 2, to the production of shaped articles such as filaments, films and moulded articles.

6. Application according to Claim 5, characterised in that the anisotropic molten masses possess conversion temperature ranges spread over at least 30 °C.

**Claims** (for the Contracting State AT)

1. Process for the preparation of anisotropic molten masses which can be shaped, based on aromatic polyesters, characterised in that homopolyesters are melted which have flow temperatures of between 200 °C and 340 °C and which are obtained by reacting the following in substantially stoichiometric proportions :

a diester derived from an alkanoic acid containing from 2 to 6 carbon atoms and from a diphenol of the formula :

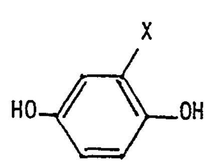

in which X represents a hydrogen atom, a methyl group or a chlorine atom, and
a dicarboxylic acid of the formula :

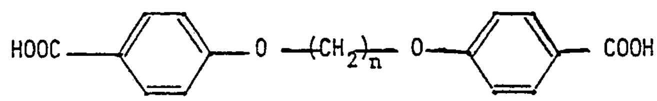

in which n is equal to 4 or 6, with the proviso that, for n = 4, X only represents a methyl group or a chlorine atom.

2. Process for the preparation of the anisotropic molten masses which can be shaped, based on aromatic polyesters, characterised in that homopolyesters are melted which have flow temperatures of between 200 °C and 340 °C and which are obtained by reacting the following in substantially stoichiometric proportions :

a diphenol of the formula :

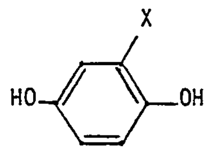

in which X represents a hydrogen atom, a methyl group or a chlorine atom, and
a dihalide or a diaryl diester derived from the acid of the formula :

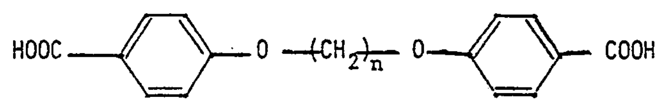

in which n is equal to 4 or 6, with the proviso that, for n = 4, X only represents a methyl group or a chlorine atom.

3. Application of the anisotropic molten masses obtained according to either one of Claims 1 and 2, to the production of shaped articles such as filaments, films and moulded articles.

4. Application according to Claim 3, characterised in that the anisotropic molten masses possess conversion temperature ranges spread over at least 30 °C.

**Ansprüche** (für die Vertragsstaaten : BE, CH, DE, FR, GB, IT, LI, LU, NL, SE)

1. Formbare, geschmolzene, anisotrope Massen auf Basis von aromatischen Polyestern, dadurch gekennzeichnet, daß sie hergestellt sind durch Schmelzen von Homopolyestern, welche die folgenden Eigenschaften aufweisen :

sie bestehen aus wiederkehrenden Einheiten der Formeln

(I) 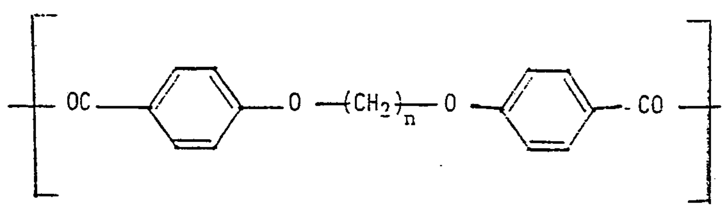

und

(II) 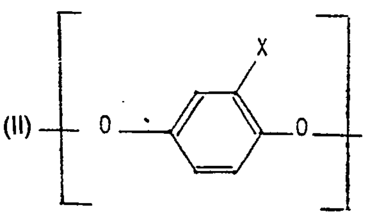

worin :

— n = 4 und X eine Methylgruppe oder ein Chloratom bedeutet,

— n = 6 und X bedeutet ein Wasserstoffatom, eine Methylgruppe oder ein Chloratom,
sie weisen Fließtemperaturen zwischen 200 °C und 340 °C auf.

2. Geschmolzene Massen gemäß Anspruch 1, dadurch gekennzeichnet, daß die Homopolyester Fließtemperaturen zwischen 250 °C und 300 °C aufweisen.

3. Verfahren zur Herstellung der anisotropen geschmolzenen Massen gemäß einem der Ansprüche 1 und 2, dadurch gekennzeichnet, daß man Homopolyester schmilzt, welche erhalten sind, indem in im wesentlichen stöchiometrischen Mengenverhältnissen reagieren gelassen wird :

ein Diester, abgeleitet von einer Alkansäure mit 2 bis 6 Kohlenstoffatomen und einem Diphenol der Formel

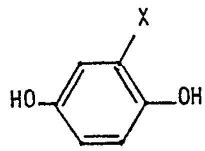

worin X ein Wasserstoffatom, eine Methylgruppe oder ein Chloratom bedeutet,

mit einer Dicarbonsäure der Formel

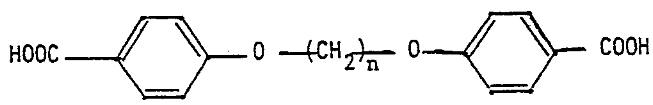

worin n gleich 4 oder 6 ist mit der Bedingung, daß für n = 4, X nur eine Methylgruppe oder ein Chloratom darstellt.

4. Verfahren zur Herstellung der geschmolzenen anisotropen Massen gemäß einem der Ansprüche 1 und 2, dadurch gekennzeichnet, daß man Homopolyester schmelzen läßt, welche erhalten sind, indem in im wesentlichen stöchiometrischen Mengenverhältnissen reagieren gelassen werden :

ein Diphenol der Formel

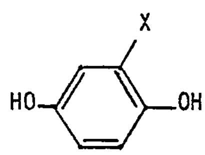

worin X ein Wasserstoffatom, eine Methylgruppe oder ein Chloratom bedeutet,

mit einem Dihalogenid oder einem Diaryl-diester, abgeleitet von der Säure der Formel

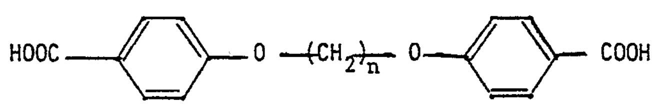

worin n gleich 4 oder 6 ist mit der Bedingung, daß für n = 4, X nur eine Methylgruppe oder ein Chloratom bedeutet.

5. Anwendung der anisotropen geschmolzenen Massen gemäß einem der Ansprüche 1 und 2 zur Herstellung von geformten Erzeugnissen, wie Fäden, Filmen und geformten Gegenständen.

6. Anwendung gemäß Anspruch 5, dadurch gekennzeichnet, daß die anisotropen geschmolzenen Massen breite Übergangstemperaturbereiche, ausgedehnt über mindestens 30 °C, haben.

**Ansprüche** (für den Vertragsstaat AT)

1. Verfahren zur Herstellung von formbaren, anisotropen, geschmolzenen Massen auf Basis von aromatischen Polyestern, dadurch gekennzeichnet, daß man Homopolyester mit Fließtemperaturen zwischen 200 °C und 340 °C schmelzen läßt, welche erhalten sind, indem in im wesentlichen stöchiometrischen Mengenverhältnissen reagieren gelassen wird :

ein Diester, abgeleitet von einer Alkansäure mit 2 bis 6 Kohlenstoffatomen und einen Diphenol der Formel

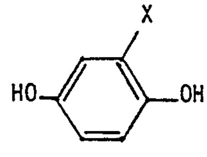

worin X ein Wasserstoffatom, eine Methylgruppe oder ein Chloratom bedeutet,

mit einer Dicarbonsäure der Formel

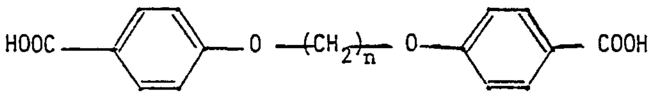

worin n gleich 4 oder 6 ist mit der Maßgabe, daß für n = 4, X nur eine Methylgruppe oder ein Chloratom bedeutet.

2. Verfahren zur Herstellung von formbaren, anisotropen, geschmolzenen Massen auf Basis von aromatischen Polyestern, dadurch gekennzeichnet, daß man Homopolyester mit einer Fließtemperatur zwischen 200 °C und 340 °C schmelzen läßt, welche erhalten sind, indem in im wesentlichen stöchiometrischen Mengenverhältnissen reagieren gelassen wird :

ein Diphenol der Formel

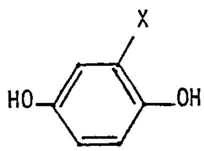

worin X ein Wasserstoffatom, eine Methylgruppe oder ein Chloratom bedeutet,

mit einem Dihalogenid oder einem Diaryl-diester, abgeleitet von der Säure der Formel

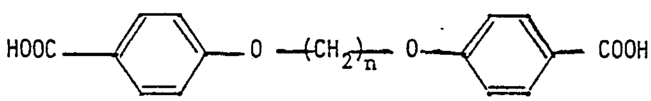

worin n gleich 4 oder 6 ist mit der Maßgabe, daß für n = 4, X nur eine Methylgruppe oder ein Chloratom bedeutet.

3. Anwendung der anisotropen geschmolzenen Massen, erhalten gemäß einem der Ansprüche 1 und 2 zur Herstellung von geformten Erzeugnissen, wie Fäden, Filmen oder geformten Gegenständen.

4. Anwendung gemäß Anspruch 3, dadurch gekennzeichnet, daß die anisotropen geschmolzenen Massen Übergangstemperaturbereiche, ausgedehnt über mindestens 30 °C, besitzen.